# NEW EUROPEAN PATENT SPECIFICATION

(11) **EP 0 317 276 B2**
(45) Date of publication and mention of the opposition decision: **24.06.1998**
(45) Mention of the grant of the patent: 14.09.1994
(21) Application number: 88310791.4
(22) Date of filing: 15.11.1988
(51) Int. Cl.: C08J 5/18, C08L 23/12, C08L 45/00

(54) **Polypropylene films**
Polypropylen-Film
Film de polypropylène

(30) Priority: 16.11.1987 GB 8726814; 23.08.1988 GB 8820025
(43) Date of publication of application: 24.05.1989
(73) Proprietor: COURTAULDS FILMS & PACKAGING (HOLDINGS) LTD., Bridgwater Somerset TA6 4PA (GB)
(72) Inventor: Syme, Blair Grieve Wilson, Bridgwater Somerset (GB); Crighton, Allan John, Highbridge Somerset (GB)
(74) Representative: Claisse, John Anthony, Dr.

(56) References cited:
- EP-A- 0 041 747
- EP-A- 0 045 580
- EP-B- 217 388
- DE-A- 1 917 439

## Description

This invention concerns oriented polypropylene films.

Biaxially oriented polypropylene homopolymer films have shown wide acceptance as packaging materials. However, for certain applications such films do not exhibit satisfactory properties, in particular for twist wrap or other instances where crease retention or dead fold are required. Thus for twist wrap polypropylene homopolymer films have been found to be inferior to films of regenerated cellulose, the polypropylene films tending to untwist to an unacceptable degree. In some cases, untwisting can be sufficient that the wrapped article falls out of its wrapper.

It has been proposed in British Patent Specification 1231861 to produce biaxially oriented polypropylene films containing from 5 to 30% by weight of a terpene polymer, a compatible hydrogenated hydrocarbon resin, or a compatible resin derivative, each having a softening point above 70°C, orientation in the longitudinal or machine direction being to a greater degree than in the transverse direction. Such films are said to show twist retention.

West German Offenlegungsschrift 3535472 also describes polypropylene films for twist wrap applications, the films containing from 10 to 40 weight percent of a low molecular weight terpene resin. These films are biaxially oriented and have an elastic modulus of at least 3000MPa in both directions.

While these previous proposals appear to offer polypropylene films with twist wrap characteristics, neither provides a film which has commercially satisfactory properties.

EP-A-0045580 describes biaxially oriented films for cigarette pack overwrap produced from blends of polypropylene and styrene-terpene copolymers, the styrene-terpene copolymers being used to impart heat-sealability to the polypropylene which is said otherwise to be difficult or even impossible to heat seal.

EP-A-0041747 describes biaxially stretched films having gas barrier properties, the films being produced from a blend of substantially crystalline polypropylene and ethylene-vinylalcohol copolymers.

Neither of these European Patent Specifications is concerned with the production of films having twist wrap properties and indeed the end uses for these prior art films are such that twist wrap properties would either be undesirable or unnecessary.

According to the present invention there is provided a biaxially oriented polypropylene film containing from 1 to 40 percent by weight of a hydrocarbon resin, the resin being substantially miscible with the polypropylene, the film having been sequentially stretched, stretching in the machine direction being by from 3.0 to 6.0:1, and having a crease retention of at least 50% as measured by ASTM D920-49.

Films of the present invention have good crease retention of at least 50 percent, in particular at least 60 percent, and more particularly at least 70 percent, as measured by ASTM D920-49.

In addition to good crease retention, films of the present invention have shown good twist retention, for example values of at least 1.0 as measured by the method defined in British Patent Specification 1231861 have been achieved.

The term hydrocarbon resin is used herein to refer not only to resins consisting of carbon and hydrogen only but to resins containing other atoms provided that when present such atoms do not significantly adversely affect the ability of the resins to impart crease retention to polypropylene films.

Hydrocarbon resins which can be used in accordance with the present invention can be selected from the terpene polymers, hydrogenated synthetic resins and compatible rosins disclosed in British Patent Specifications 993387 and 1231861. Hydrogenated synthetic terpene resins are usually preferred because they tend to be colorless or water-white compared with resins based on naturally occurring terpenes which tend to be yellow. In general it is preferred to use resins based on alicyclic terpenes.

The amount of hydrocarbon resin present is from 1 to 40, preferably from 10 to 25, and advantageously from 15 to 20 percent by weight based on the combined weight of the polypropylene and the hydrocarbon resin.

The polypropylene is preferably a polypropylene homopolymer having a melt flow index (ASTM 1238 at 230°C under Condition L) of from 1 to 10 dg/min, and more preferably from 2 to 5 dg/min.

Films of the present invention are biaxially oriented, and good crease retention characteristics, in particular of at least 50% as measured by ASTM D920-49, have been achieved by effecting stretching in the transvese direction at a temperature of at least 10, preferably at least 15, and more particularly at least 20 Centigrade degrees below the crystalline melting point of the polypropylene. Such temperatures are substantially below those conventionally used in the art for orienting polypropylene film in the transverse direction. Analogous films of polypropylene without the hydrocarbon resin being present would be expected to fracture under such stretching conditions. However, conventional temperatures can be used in the machine direction.

In a preferred method of producing films of the present invention, a web of polypropylene homopolymer containing from 1 to 40 percent by weight of hydrocarbon resin is melt extruded, for example on to a chill roller, and then stretched in the machine direction, i.e. in the direction of extrusion, for example using heated rollers. Stretching is preferably effected at a temperature of from 85 to 140°C, and more preferably from 90 to 120°C. The degree of stretch is from 3.0 to 6.0:1, and more preferably from 4.0 to 6.0:1.

The mono-axially oriented film is then preferably oriented in the transverse direction using a stenter. Preferred stretch ratios in the transverse direction are from 5.0 to 16.0:1, more particularly from 7.0 to 12.0:1.

If desired, films of the present invention can be provided with one or more further polymeric layers, for example to provide printable and/or heat sealable films. Such layers can be produced, for example, by coextrusion with a base web of the polypropylene containing the hydrocarbon resin. Examples of further polymeric layers which can be provided include those produced from polymers containing units derived from at least two of ethylene, propylene and but-1-ene. Other polymeric layers which can be used include polyethylene containing units derived from at least one of hex-1-ene, oct-1-ene and 4-methylpent-1-ene. Mixtures of such polymers can also be used.

Films of the present invention can include one or more additives known in the art, for example they can contain antistatic and/or slip agents. Examples of specific materials which can be included with the hydrocarbon resin and/or in a further polymeric layer include silica, glycerol monostearate, bis-ethoxylated amines, fatty acid amides, e.g. erucamide, and polydimethylsiloxanes.

It is also possible to include organic or inorganic fillers in the polypropylene used to form films of the present invention.

Examples of organic fillers which can be used include polyamides and polyesters, and examples of inorganic fillers which can be used include calcium carbonate, talc, barium sulfate and clays. The filler particles can have particle sizes of from 1 to 20 microns. The filler can be present in amounts of from 1 to 30 percent by weight of the film.

The temperature stability of films of the present invention can be improved by subjecting them to heat treatment, for example at 130 to 160°C. This can be beneficial where it is desired to effect heat sealing of the films.

Other post orientation treatment steps known in the art can also be effected. Thus films of the present invention can be provided with a metal layer, for example by lamination or vapour deposition of a metal, e.g. to produce a layer of aluminum. Corona discharge treatment can be used to improve the printability of the films.

The thickness of films of the present invention is preferably from 20 to 40 µm, advantageously about 25 µm. If other polymeric layers are present, they preferably have a thickness of from 1 to 10 µm.

Films of the present invention in addition to showing good crease retention have shown increased stiffness compared with biaxially oriented polypropylene homopolymer film of the same thickness and produced under conventional processing conditions but without the hydrocarbon resin. Crease retention values in excess of 70 percent in both the machine and transverse directions (as measured by ASTM D920-49) have been achieved compared with less than 30 percent for a conventional film. In addition, rigidity as measured by BS2782 (method 232) has been observed to be almost doubled in both the machine and transverse directions compared with conventional film of the same thickness.

The following Examples are given by way of illustration only. All parts are by weight unless stated otherwise, and all melt flow index values are according to ASTM 1238 at 230°C under Condition L.

### Example 1

A polypropylene homopolymer of melt flow index 3.0 was coextruded through a sheet die at 240°C. with a layer on each side of a random copolymer of propylene and ethylene containing 4% by weight of units derived from ethylene. The two outer layers formed about 4% of the total weight of the sheet.

The extruded three layer web was chilled to 30°C using a conventional water cooled chill roll and water bath. The web was then heated to 100°C using heated rollers and then stretched in the longitudinal direction by 350%. The web was thereafter heated to 160°C, and stretched by 900% in the transverse direction.

The resultant film after cooling had the properties listed in Table 1. M.D. signifies in the machine direction, and T.D. signifies in the transverse direction.

### Example 2

A polypropylene homopolymer of melt flow index 3.0 was compounded with 15 percent of a hydrogenated C-9 terpolymer of alpha-methyl styrene, vinyl toluene and indene (Arkon P125 - Arakawa Chemical Co., Japan), and extruded through a sheet die at 240°C. The extruded polymer was chilled to 30°C using a conventional water cooled chill roll and water bath. The resulting cast web was heated to 100°C using heated rollers and then stretched in the longitudinal direction by 350%. The web was thereafter cooled, reheated to 110°C, and stretched by 900% in the transverse direction.

The resultant film after cooling had the properties listed in Table 1.

### Example 3

A flat web of the polypropylene homopolymer used in Example 2 was coextruded with a layer on each side of a random copolymer of propylene and ethylene containing 4% by weight of units derived from ethylene. The two outer layers formed about 4% of the total weight of the sheet.

After chilling and longitudinal stretching of the web as in Example 1, it was stretched by 1000% in the transverse direction by means of a stenter frame oven at a temperature of 140°C. The film was then annealed at 130°C while allowing 8% reduction in width to improve its dimensional stability.

The resultant film after cooling had the properties listed in Table 1.

**TABLE 1**

| Property | | Example 1 (Comparison) | Example 2 | Example 3 |
|---|---|---|---|---|
| Thickness (µm) | | 30 | 30 | 25 |
| Rigidity (g/cm, BS2782 method 232) | - M.D. | 1.3 | 2.3 | 1.3 |
| | - T.D. | 2.3 | 4.0 | 2.3 |
| Elastic Modulus (MPa) | - M.D. | 1400 | 2100 | 2200 |
| | - T.D. | 2500 | 3600 | 3900 |
| Crease retention (%, ASTM D920-49) | - M.D. | 16 | 65 | 70 |
| | - T.D. | 26 | 66 | 74 |

## Claims

1. A biaxially oriented polypropylene film containing from 1 to 40 percent by weight of a hydrocarbon resin, the resin being substantially miscible with the polypropylene, characterized in that the film has been sequentially stretched, stretching in the machine direction being from 3.0 to 6.0:1, and the film has a crease retention of at least 50% as measured by ASTM D920-49.

2. A biaxially oriented polypropylene film according to claim 1, wherein the film has a crease retention of at least 60% as measured by ASTM D920-49.

3. A biaxially oriented polypropylene film according to claim 2, wherein the film has a crease retention of at least 70% as measured by ASTM D920-49.

4. A biaxially oriented polypropylene film according to any of the preceding claims, wherein the film has a twist retention of at least 1.0.

5. A biaxially oriented polypropylene film according to any of the preceding claims, wherein the hydrocarbon resin is a terpene resin, a hydrogenated synthetic resin or a compatible rosin.

6. A biaxially oriented polypropylene film according to claim 5, wherein the hydrocarbon resin is a synthetic hydrogenated resin.

7. A biaxially oriented polypropylene film according to any of the preceding claims, having at least one further polymeric layer thereon.

8. A biaxially oriented polypropylene film according to any of the preceding claims, wherein the polypropylene contains an organic or inorganic filler.

9. A method of producing a biaxially oriented polypropylene film according to any of the preceding claims, the method comprising sequentially stretching a polymer web comprising polypropylene containing from 1 to 40 percent of a hydrocarbon resin, the stretching first being in the machine direction at a stretch ratio of from 3.0 to 6.0:1 and then in the transverse direction, the stretching in the transverse direction being effected at a temperature of at least 10 Centigrade degrees below the crystalline melting point of the polypropylene.

10. A method according to claim 9, wherein the stretching in the transverse direction is effected at a temperature of at least 15 Centigrade degrees below the crystalline melting point of the polypropylene.

11. A method according to claim 9 or claim 10, wherein the stretching in the transverse direction is effected at a temperature of at least 20 Centigrade degrees below the crystalline melting point of the polypropylene.

## Patentansprüche

1. Biaxial ausgerichteter Polypropylenfilm, welcher 1 bis 40 Gewichtsprozent eines Kohlenwasserstoffharzes enthält, das im wesentlichen mit dem Polypropylen mischbar ist, **dadurch gekennzeichnet**, daß der Film in aufeinanderfolgenden Arbeitsschritten gestreckt worden ist, und zwar in Maschinenlaufrichtung im Verhältnis von 3,0 bis 6,0:1, und eine Falzbeständigkeit von wenigstens 50 % besitzt, gemessen nach ASTM D920-49.

2. Biaxial ausgerichteter Polypropylenfilm nach Anspruch 1, welcher eine Falzbeständigkeit von wenigstens 60 % besitzt, gemessen nach ASTM D920-49.

3. Biaxial ausgerichteter Polypropylenfilm nach Anspruch 2, welcher eine Falzbeständigkeit von wenigstens 70 % besitzt, gemessen nach ASTM D920-49.

4. Biaxial ausgerichteter Polypropylenfilm nach einem der vorhergehenden Ansprüche, **gekennzeichnet durch** eine Drillbeständigkeit von wenigstens 1,0.

5. Biaxial ausgerichteter Polypropylenfilm nach einem der vorhergehenden Ansprüche, bei welchem das Kohlenwasserstoffharz ein Terpenharz, ein hydriertes synthetisches Harz oder ein verträgliches Kolophonium ist.

6. Biaxial ausgerichteter Polypropylenfilm nach Anspruch 5, bei welchem das Kohlenwasserstoffharz ein synthetisches hydriertes Harz ist.

7. Biaxial ausgerichteter Polypropylenfilm nach einem der vorhergehenden Ansprüche, welcher wenigstens eine weitere Polymerschicht auf sich trägt.

8. Biaxial ausgerichteter Polypropylenfilm nach einem der vorhergehenden Ansprüche, bei welchem das Polypropylen einen organischen oder anorganischen Füller enthält.

9. Verfahren zur Herstellung eines biaxial ausgerichteten Polypropylenfilms nach einem der vorhergehenden Ansprüche, bei welchem eine Polymerbahn, die ein Polypropylen aufweist, das 1 bis 40 % eines Kohlenwasserstoffharzes enthält, in aufeinanderfolgenden Arbeitsschritten gestreckt wird, zuerst in der Maschinenlaufrichtung bei einem Streckverhältnis von 3,0 bis 6,0:1 und dann in der Querrichtung, wobei das Strecken in der Querrichtung bei einer Temperatur von wenigstens 10° C unterhalb des kristallinen Schmelzpunkts des Polypropylens bewirkt wird.

10. Verfahren nach Anspruch 9, bei welchem das Strecken in der Querrichtung bei einer Temperatur von wenigstens 15° C unterhalb des kristallinen Schmelzpunkts des Polypropylens durchgeführt wird.

11. Verfahren nach Anspruch 9 oder 10, bei welchem das Strekken in der Querrichtung bei einer Temperatur von wenigstens 20° C unterhalb des kristallinen Schmelzpunkts des Polypropylens durchgeführt wird.

## Revendications

1. Film de polypropylène orienté biaxialement, contenant de 1 à 40 pour cent en poids d'une résine d'hydrocarbure, la résine étant substantiellement miscible avec le polypropylène, caractérisé par le fait que le film a été étiré séquentiellement, l'étirage dans le sens machine étant de 3,0 à 6,0:1, et le film présente une rétention des plis d'au moins 50%, telle que mesurée par ASTM D920-49.

2. Film de polypropylène orienté biaxialement selon la revendication 1, dans lequel le film présente une rétention des plis d'au moins 60%, telle que mesurée par ASTM D920-49.

3. Film de polypropylène orienté biaxialement selon la revendication 2, dans lequel le film présente une rétention des plis d'au moins 70%, telle que mesurée par ASTM D920-49.

4. Film de polypropylène orienté biaxialement selon l'une des revendications précédentes, dans lequel le film présente une rétention de la torsion d'au moins 1,0.

5. Film de polypropylène orienté biaxialement selon l'une des revendications précédentes, dans lequel la résine d'hydrocarbure est une résine terpénique, une résine de synthèse hydrogénée ou une colophane compatible.

6. Film de polypropylène orienté biaxialement selon la revendication 5, dans lequel la résine d'hydrocarbure est une résine de synthèse hydrogénée.

7. Film de polypropylène orienté biaxialement selon l'une des revendications précédentes, ayant au moins une couche polymère supplémentaire, disposée sur lui.

8. Film de polypropylène orienté biaxialement selon l'une des revendications précédentes, dans lequel le polypropylène contient une charge organique ou minérale.

9. Procédé de fabrication d'un film de polypropylène orienté biaxialement tel que défini à l'une des revendications précédentes, le procédé comprenant un étirage séquentiel d'une bande de polymère comprenant du polypropylène contenant de 1 à 40 pour cent d'une résine d'hydrocarbure, l'étirage étant effectué tout d'abord dans le sens machine à un rapport d'étirage de 3,0 à 6,0:1, puis dans le sens transversal, l'étirage dans le sens transversal étant effectué à une température d'au moins 10 degrés Centigrade au-dessous du point de fusion cristalline du polypropylène.

10. Procédé selon la revendication 9, dans lequel l'étirage dans le sens transversal est effectué à une température d'au moins 15 degrés Centigrade au-dessous du point de fusion cristalline du polypropylène.

11. Procédé selon la revendication 9 ou la revendication 10, dans lequel l'étirage dans le sens transversal est effectué à une température d'au moins 20 degrés Centigrade au-dessous du point de fusion cristalline du polypropylène.
